# EUROPEAN PATENT SPECIFICATION

(11) **EP 3 756 326 B1**
(45) Date of publication and mention of the grant of the patent: **04.08.2021**
(21) Application number: 19705519.7
(22) Date of filing: 15.02.2019
(51) Int. Cl.: H04L 29/06

(54) **SECURITY NEGOTIATION IN SERVICE BASED ARCHITECTURES (SBA)**
SICHERHEITSVERHANDLUNG IN DIENSTBASIERTEN ARCHITEKTUREN (SBA)
NÉGOCIATION DE SÉCURITÉ DANS DES ARCHITECTURES FONDÉES SUR UN SERVICE (SBA)

(30) Priority: 19.02.2018 US 201862632415 P
(43) Date of publication of application: 30.12.2020
(73) Proprietor: TELEFONAKTIEBOLAGET LM ERICSSON (PUBL), 164 83 Stockholm (SE)
(72) Inventor: LEHTOVIRTA, Vesa, 02620 Espoo (FI); NORRMAN, Karl, 11628 Stockholm (SE); MARTINEZ DE LA CRUZ, Pablo, 28045 Madrid (ES); SAARINEN, Pasi, 163 50 Spånga (SE); TORVINEN, Vesa, 21570 Sauvo (FI)
(74) Representative: Ericsson
(86) International application number: PCT/EP2019/053865
(87) International publication number: WO 2019/158716

(56) References cited:
- US-A1- 2015 199 496
- DR JIANYONG CHEN ZTE CORPORATION P R CHINA: "First draft--General security service (policy) for secure mobile end to end data communication, X.msec-3;TD 2330", ITU-T DRAFT ; STUDY PERIOD 2005-2008, INTERNATIONAL TELECOMMUNICATION UNION, GENEVA ; CH, vol. 9/17, 19 April 2006 (2006-04-19), pages 1-32, XP017563440, [retrieved on 2007-03-23]
- TIM: "Analysis of different approaches for implementing SBA security over N32 reference point", 3GPP DRAFT; S3-180028, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Gothenburg (Sweden); 20180122 - 20180126 12 January 2018 (2018-01-12), XP051390476, Retrieved from the Internet: URL:http://www.3gpp.org/ftp/tsg%5Fsa/WG3%5 FSecurity/TSGS3%5F90%5FGothenburg/Docs/ [retrieved on 2018-01-12]
- ERICSSON: "Stepwise way forward for SBA security: SEPP-SEPP security capability negotiation", 3GPP DRAFT; S3-180710_SEPP-SEPP_NEGOTIATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. San Diego (US); 20180226 - 20180302 19 February 2018 (2018-02-19), XP051409128, Retrieved from the Internet: URL:http://www.3gpp.org/ftp/tsg%5Fsa/WG3%5 FSecurity/TSGS3%5F90Bis%5FSanDiego/Docs/ [retrieved on 2018-02-19]

## Description

### RELATED APPLICATIONS

This application claims priority to U.S. Provisional Patent Application Serial No. 62/632,415, entitled "Security Negotiation in SBA," and filed February 19, 2018.

### TECHNICAL FIELD

The present disclosure relates generally to security negotiations, and in particular, to techniques and devices for negotiating security mechanisms between security gateways in different networks.

### BACKGROUND

The Third Generation Partnership Project (3GPP) is working on Service Based Architecture (SBA), which is being specified in several working groups and Technical Specifications (TSs). In particular, SA2 TSs 23.501 and 23.502 provide the architectural aspects of SBA, while CT4 TS 29.500 provides the SBA stage 3 realization. The security aspects of SBA are being specified in clause 9 of SA3 TS 33.501.

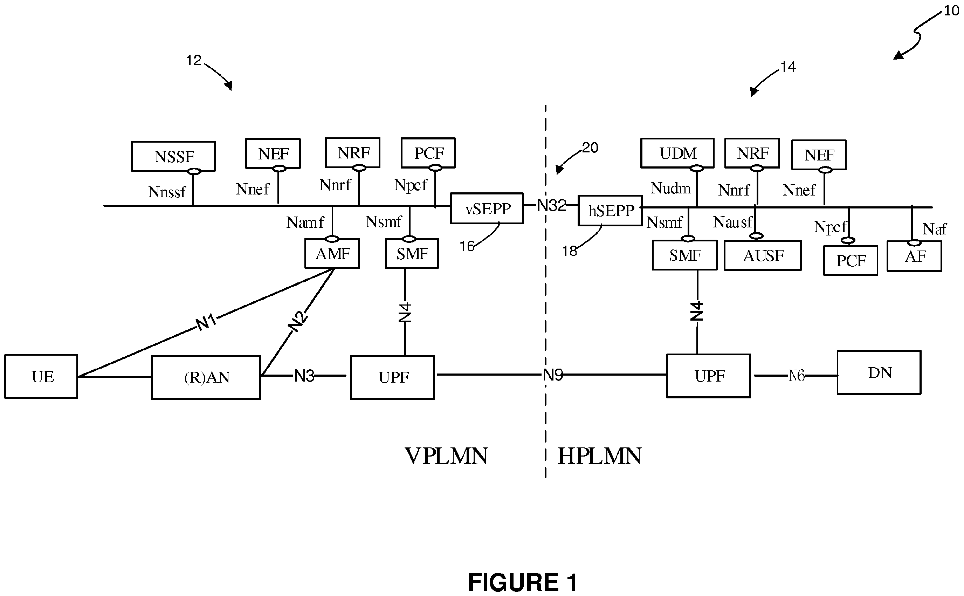

Figure 1 illustrates an example SBA roaming architecture diagram from TS 23.501. As seen in Figure 1, there are Secure Edge Protection Proxy (SEPP) functions (i.e., vSEPP 16 and hSEPP 18) in each public land mobile network (PLMN) (i.e., Visitors PLMN (VPLMN) 12 and Home PLMN (HPLMN) 14) that terminate a N32 reference point 20. All inter-PLMN signaling traverses via the SEPP functions 16, 18, and the SEPP is defined in clause 6.2.7 of TS 23.501 as a non-transparent proxy that supports functionality such as message filtering and policing on inter-PLMN control plane interfaces and topology hiding. The functionality of the SEPPs and the security solution for N32 is being specified in TS 33.501.

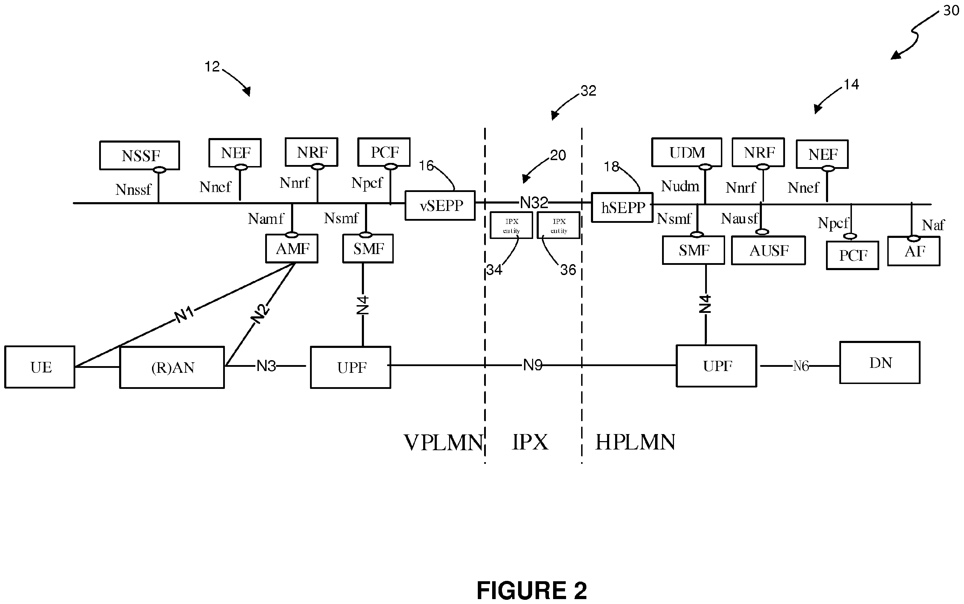

Although the PLMNs 12, 14 are connected in the 3GPP architecture via the N32 reference point 20, there is, in reality, an interconnect network (i.e., an IP Packet Exchange - IPX) between the SEPPs, which is operated by one or more IPX providers. Figure 2 illustrates one such IPX 32 on the roaming 5G System architecture 30, and in particular, a home routed scenario in service-based interface representation. As seen in Figure 2, the IPX providers have a business model where they handle, for example, routing and filtering actions on the signaling traffic between the PLMNs. To accomplish these functions, IPX network entities 34, 36 need to see and modify certain signaling message elements of signaling messages sent between the PLMNs. IPX providers had this business model in 4G and earlier generation networks, and it appears evident that this same model will continue in 5G networks. Indeed, the Global System for Mobile communication Association (GSMA) has already indicated the IPX provider requirements for 3GPP in a Liaison Statement to SA3.

The IPX provider requirements indicate that the security solution for N32 reference point 20 will be quite complex. At the same time, 3GPP SA3 is being pressured to specify security solutions for SBA, and especially for N32, in the Rel-15 timeframe. However, SA3 may not be able to provide a security solution for N32 that satisfies all IPX requirements specified in Rel-15.

One proposal to address this issue is to implement a step-wise approach. Particularly, in a first step, Rel-15 would specify a partial (or simpler) SBA security solution even though that solution would not satisfy all requirements for N32. In a second step, another (full) SBA security solution that did meet all requirements for N32 would be specified in Rel-16. However, the problem with such a step-wise approach is that once a (partial) security solution is deployed in Rel-15, it will be very difficult, if not impossible, to migrate to another (full) security solution in the network in Rel-16 (or later) without bidding down problems. For example, an attacker, such as a man in the middle (MiTM), could always pretend to be a Rel-15 SEPP entity and therefore avoid having to use the (full) Rel-16 security solution.

### SUMMARY

Embodiments of the present disclosure provide techniques that may help to solve these and other challenges. In particular, the present embodiments add integrity protected security capability negotiation between the SEPPs. The negotiation is based on mutual authentication and key agreement between the SEPPs. Using the integrity protected security capability negotiation, the SEPPs can negotiate which particular security solution should be used over N32 reference point, thereby negating the possibility of bidding down attacks.

In some embodiments, the present disclosure provides a method for negotiating a security mechanism with a responding security gateway. In these embodiments the method comprises, in a negotiation stage, establishing a first connection between an initiating security gateway and the responding security gateway, wherein the first connection is configured to provide integrity protection of messages communicated between the initiating security gateway and the responding security gateway, transmitting a request message to the responding security gateway over the first connection, wherein the request message identifies one or more security mechanisms supported by the initiating security gateway, and receiving a response message from the responding security gateway over the first connection, wherein the response message identifies an application layer security mechanism selected by the responding security gateway from among the one or more security mechanisms supported by the initiating security gateway. Thereafter, in a communications stage, the method comprises communicating signaling messages with the responding security gateway using the selected application layer security mechanism.

In one embodiment, the first connection is an integrity protected Transport Layer Security (TLS) connection.

In another embodiment, the first connection is an integrity protected Internet Protocol Security (IPsec) connection.

In one embodiment, the method further comprises, in the communications stage, establishing a second connection between the initiating security gateway and the responding security gateway, and communicating the signaling messages over the second connection with the responding security gateway using the selected application layer security mechanism.

In one embodiment, the second connection is an N32-F connection. In another embodiment, the application layer security is an N32 Application Layer Security.

In one embodiment, communicating signaling messages with the responding security gateway using the selected application layer security mechanism comprises protecting the signaling messages communicated between network functions associated with respective different Public Land Mobile Networks (PLMNs).

In one embodiment, the method further comprises protecting user plane traffic messages communicated between network functions in respective first and second different Public Land Mobile Networks (PLMNs).

In one embodiment, the one or more security mechanisms are ordered according to a preference of one or both of the initiating security gateway and the responding security gateway.

In one embodiment, the one or more security mechanisms comprise one or more security protocols.

In one embodiment, the negotiation stage is performed by a Secure Edge Protection Proxy (SEPP).

In another embodiment, however, the negotiation stage is performed by one of a network resource function (NRF), a network exposure function (NEF), and a network server device.

In one embodiment, the method further comprises indicating to the responding security gateway that the security mechanism to be selected is being negotiated within a secure connection. In such embodiments, indicating that the security mechanism to be selected is being negotiated is indicated in a message header communicated outside of the protected part of the secure connection. In other embodiments, such indications are performed by populating an address field of the request message with an address of the security negotiation module.

In one embodiment, the method further comprises detecting that the selected application layer security mechanism should be changed, and triggering selection of a new application layer security mechanism within a predetermined time period.

In one embodiment, the method further comprises negotiating the application layer security mechanism with an interconnect node associated with an Internet Provider prior to transmitting the request message to the responding security gateway.

In at least some embodiments, the present disclosure provides a network node for negotiating a security mechanism with a responding security gateway. In these embodiments, the initiating security gateway comprises communications interface circuitry configured to communicate messages with the responding security gateway over one or more connections, and processing circuitry operatively connected to the communications interface circuitry. The processing circuitry is configured to, in a negotiation stage, establish a first connection between an initiating security gateway and the responding security gateway, wherein the first connection is configured to provide integrity protection of messages communicated between the initiating security gateway and the responding security gateway, transmit a request message to the responding security gateway over the first connection, wherein the request message identifies one or more security mechanisms supported by the initiating security gateway, and receive a response message from the responding security gateway over the first connection, wherein the response message identifies an application layer security mechanism selected by the responding security gateway from among the one or more security mechanisms supported by the initiating security gateway. In a communications stage, the processing circuitry is configured to communicate signaling messages with the responding security gateway using the selected application layer security mechanism.

In other embodiments, the present disclosure provides a method for negotiating a security mechanism with an initiating security gateway. In these embodiments, the method comprises, in a negotiation stage, establishing a first connection between the initiating security gateway and a responding security gateway, wherein the first connection is configured to provide integrity protection of messages communicated between the initiating security gateway and the responding security gateway, receiving a request message from the initiating security gateway over the first connection, wherein the request message identifies one or more security mechanisms supported by the initiating security gateway, selecting an application layer security mechanism from among the one or more security mechanisms supported by the initiating security gateway, and transmitting a response message to the initiating security gateway over the first connection, wherein the response message identifies the application layer security mechanism selected by the responding security gateway. In a communications stage the method further comprises communicating signaling messages with the initiating security gateway using the selected application layer security mechanism.

In one embodiment, one or both of the request and response messages comprise integrity protected messages of a protocol.

In one embodiment, the method further comprises establishing a second connection between the initiating security gateway and the responding security gateway, wherein the second connection is different than the first connection, and communicating the signaling messages with the initiating security gateway using the selected application layer security mechanism over the second connection.

In one embodiment, selecting the application layer security mechanism comprises selecting the application layer security mechanism based on a local policy of the responding security gateway.

In one embodiment, selecting the application layer security mechanism comprises selecting the application layer security mechanism based on a local policy of the initiating security gateway.

In one embodiment, selecting the application layer security mechanism comprises selecting the application layer security mechanism based on a preference order of the initiating security gateway.

In one embodiment, selecting the application layer security mechanism comprises negotiating the application layer security mechanism with an interconnect node associated with an Internet Provider.

In one embodiment, the method further comprises negotiating for one or more features that are unrelated to security. In such embodiments, negotiating for one or more features that are unrelated to security comprises informing the initiating security gateway that another security gateway is to be contacted as part of the security negotiation.

In one embodiment, the response message further identifies the one or more security mechanisms supported by the initiating security gateway.

In one embodiment, selecting the application layer security mechanism comprises selecting the application layer security mechanism for all network functions in a PLMN.

In one embodiment, selecting the application layer security mechanism comprises selecting the application layer security mechanism for a network function independently of one or more other network functions.

In one embodiment, the application layer security mechanism that is selected is valid for as long as the first connection is maintained.

In one embodiment, selecting the application layer security mechanism comprises periodically selecting a new application layer security mechanism.

In one embodiment, responsive to selecting a new application layer security mechanism, the method comprises terminating all connections to which a currently selected application layer security mechanism has been applied, opening new connections, and applying the new application layer security mechanism to each of the new connections.

In one embodiment, the response message identifies the application layer security mechanism selected by the responding security gateway using corresponding symbolic identifiers.

Additionally, in one embodiment, the present disclosure provides a network node for negotiating a security mechanism with an initiating security gateway. In these embodiments, the network node comprises communications interface circuitry configured to communicate messages with an initiating security gateway over one or more connections, and processing circuitry operatively connected to the communications interface circuitry. The processing circuitry is configured to, in a negotiation stage, establish a first connection between the initiating security gateway and the responding security gateway, wherein the first connection is configured to provide integrity protection of messages communicated between the initiating security gateway and the responding security gateway, receive a request message from the initiating security gateway over the first connection, wherein the request message identifies one or more security mechanisms supported by the initiating security gateway, select an application layer security mechanism from among the one or more security mechanisms supported by the initiating security gateway, and transmit a response message to the initiating security gateway over the first connection, wherein the response message identifies the application layer security mechanism selected by the responding security gateway. In a communications stage, the processing circuitry is configured to communicate signaling messages with the initiating security gateway using the selected application layer security mechanism.

In at least one embodiment, the present disclosure provides a non-transitory computer-readable medium comprising instructions stored thereon, wherein when the instructions are executed by processing circuitry of a network node, causes the network node to, in a negotiation stage, establish a first connection between an initiating security gateway and the responding security gateway, wherein the first connection is configured to provide integrity protection of messages communicated between the initiating security gateway and the responding security gateway, transmit a request message to the responding security gateway over the first connection, wherein the request message identifies one or more security mechanisms supported by the initiating security gateway, and receive a response message from the responding security gateway over the first connection, wherein the response message identifies an application layer security mechanism selected by the responding security gateway from among the one or more security mechanisms supported by the initiating security gateway. In a communications stage, the processing circuitry is configured to communicate signaling messages with the responding security gateway using the selected application layer security mechanism.

In at least one embodiment, the present disclosure provides a non-transitory computer-readable medium comprising instructions stored thereon, wherein when the instructions are executed by processing circuitry of a network node, causes the network node to, in a negotiation stage, establish a first connection between the initiating security gateway and the responding security gateway, wherein the first connection is configured to provide integrity protection of messages communicated between the initiating security gateway and the responding security gateway, receive a request message from the initiating security gateway over the first connection, wherein the request message identifies one or more security mechanisms supported by the initiating security gateway, select an application layer security mechanism from among the one or more security mechanisms supported by the initiating security gateway, and transmit a response message to the initiating security gateway over the first connection, wherein the response message identifies the application layer security mechanism selected by the responding security gateway. In a communications stage, the processing circuitry is configured to communicate signaling messages with the initiating security gateway using the selected application layer security mechanism.

### BRIEF DESCRIPTION OF THE DRAWINGS

Figure 1 is a schematic block diagram illustrating a roaming 5G System architecture - home routed scenario in service-based interface representation.
Figure 2 is a schematic block diagram illustrating an IPX on a roaming 5G System architecture - home routed scenario in service-based interface representation.
Figure 3 is a schematic block diagram of first and second SEPPs in different communication networks according to one embodiment of the present disclosure.
Figure 4 is a signaling diagram illustrating a security mechanism negotiation technique according to one embodiment of the present disclosure.
Figure 5 is a flow diagram illustrating a method implemented at a first SEPP of negotiating a security mechanism with a second SEPP node according to one embodiment of the present disclosure.
Figure 6 is a flow diagram illustrating a method implemented at the second SEPP of negotiating a security mechanism with the first SEPP according to one embodiment of the present disclosure.

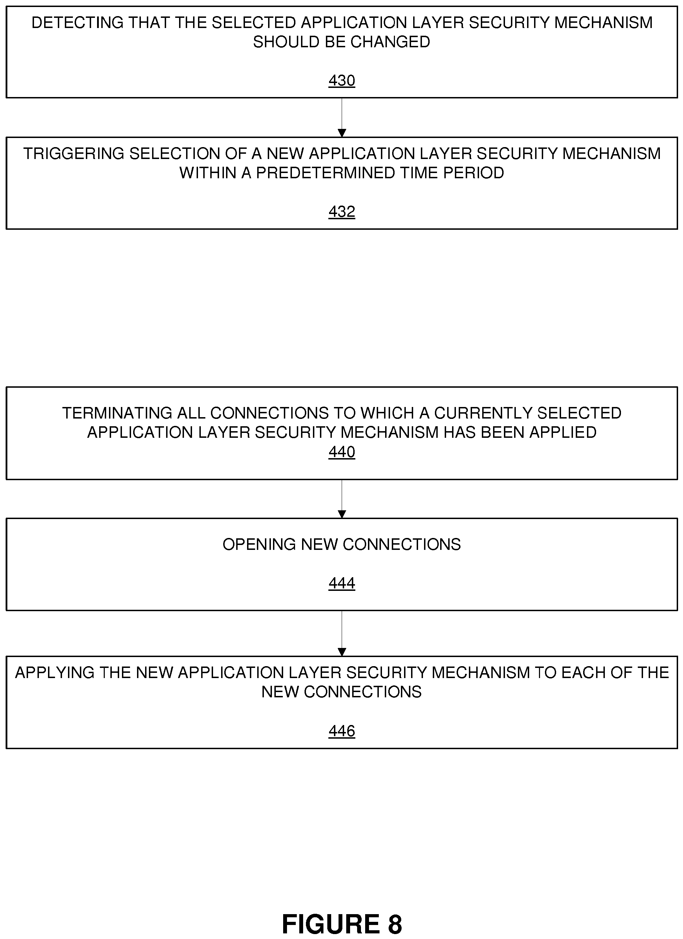

Figure 7-8 are flow diagrams illustrating a method implemented at one or both of the first and second SEPPs of negotiating a security mechanism according to embodiments of the present disclosure.
Figure 9 illustrates a network node, such as an SEPP, and some of its components configured according to an embodiment of the present disclosure.
Figure 10 is a functional block diagram of processing circuitry in a network node, such as an SEPP, operating in a communications network according to an embodiment of the present disclosure.

### DETAILED DESCRIPTION

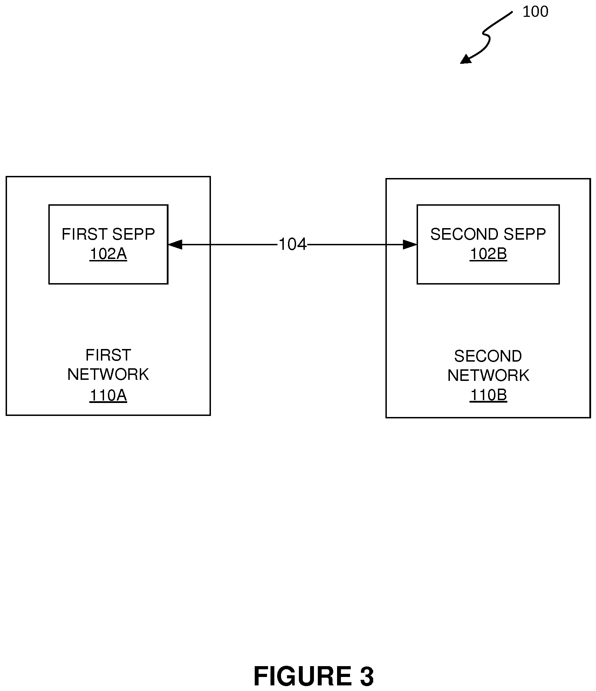

The present disclosure provides techniques for security mechanism negotiation between security gateways from different networks, such as first and second SEPPs in a visited PLMN and a home PLMN, respectively. For example, as seen in Figure 3, a first SEPP 102A of a first network 110A may negotiate a security mechanism for communication with a second SEPP 102B of second network 110B over one or more communication channels 104.

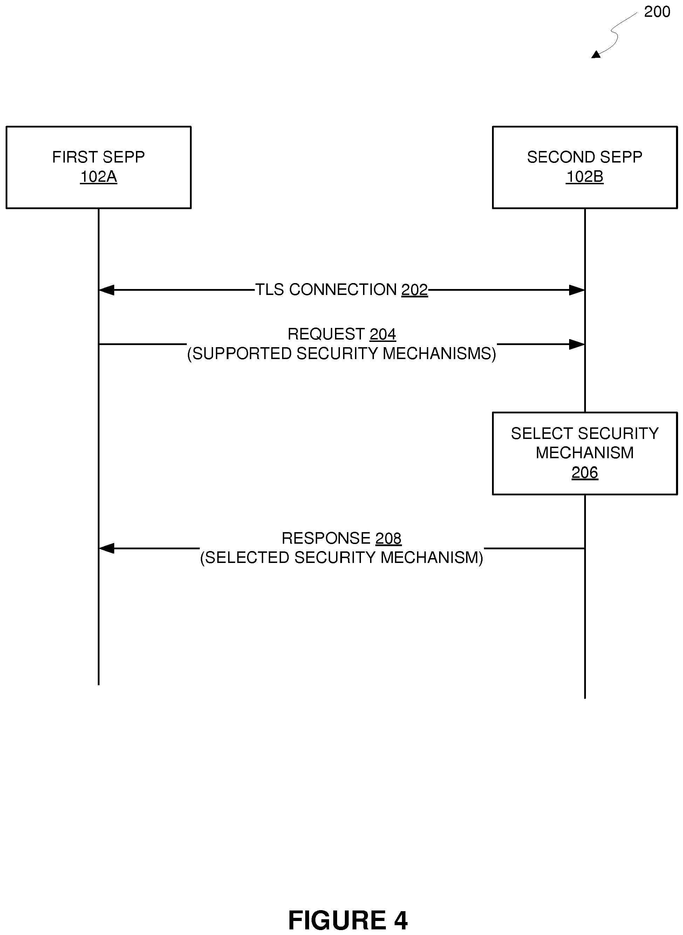

Figure 4 is a signalling diagram illustrating a security mechanism negotiation technique between the first and second SEPPs 102A, 102B according to one embodiment of the present disclosure. In this embodiment, an integrity protected Transport Layer Security (TLS) connection is established between the first and second SEPPs 102A, 102B (line 202). The TLS connection may, in at least some embodiments, be encrypted. Once the TLS connection is established, SEPP 102A (referred to herein as an "initiating" SEPP) sends a request message (line 204) to SEPP 102B (referred to herein as a "responding" SEPP). In this embodiment, the request message indicates to SEPP 102B the security mechanisms that are supported by SEPP 102A. The supported security mechanisms may be ordered in any manner needed or desired. However, in one embodiment, SEPP 102A orders the security mechanisms in the request message according to its own preference order. Responsive to receiving the request message, SEPP 102B selects one of the security mechanisms indicated by SEPP 102A in the request message (box 206). According to the present disclosure, the selected security mechanism is supported by both SEPP 102A and SEPP 102B. Once selected, SEPP 102B sends a response message to SEPP 102A identifying the selected security mechanism (line 208). In at least one embodiment, both the request message and the response message are messages defined in 3GPP TS 23.502.

While the signalling diagram seen in Figure 4 depicts an embodiment where the first and second SEPPs 102A, 102B perform the security negotiation, those of ordinary skill in the art should appreciate that this is for illustrative purposes only, and that the security mechanism negotiation of the present disclosure is not limited solely to performance by SEPPs. For example, in some embodiments, the security negotiation is performed by Network Resource Functions (NRFs) instead of the SEPPs 102A, 102B. In these embodiments, the NRFs and the SEPPs may or may not be co-located. In other embodiments, Network Functions, such as a Network Exposure Function (NEF), for example, are configured to perform the security negotiation, while in other embodiments, network servers are configured to perform the security negotiation. Therefore, performing the security mechanism negotiation in accordance with the present embodiments is not limited solely to SEPPs.

Additionally, the security mechanism being negotiated by SEPPs 102A, 102B can be used to protect signaling messages or traffic messages. For example, in one embodiment, the security mechanism being negotiated is the mechanism used by the SEPPs to protect the signaling between the Network Functions (NF) or the NF services in different PLMNs, such as VPLMN 12 and HPLMN 14. In another embodiment, the security mechanism being negotiated is the mechanism used to protect traffic between network functions. Such traffic includes, but is not limited to, user plane traffic between user plane functions (UPFs).

Further, the security mechanisms being negotiated are not limited to any one specific 3GPP Release. For example, in one embodiment, the security mechanisms being negotiated are the security mechanisms for N32 (e.g., application layer security) in a 3GPP Release (e.g. Rel-15), as well as in one or more different 3GPP Releases (e.g. Rel-16). This means that the negotiation, when performed in accordance with the present embodiments, does not need to specifically identify the exact technical solution (like TLS). Rather, the negotiation can simply refer to a technical solution specified in a given 3GPP Release by means of a symbolic name. For example, security mechanism "X" may map to a Rel-15 solution, while security mechanism "Y" may map to a Rel-16 solution.

The selection of a particular security mechanism can also be based on various criteria. In one embodiment, for example, the SEPP receiving the request message (e.g., the "responding" SEPP 102B) selects the security mechanism based on one of its own local policies. In another embodiment, the SEPP receiving the request message selects the security mechanism based on a local policy of the SEPP that sent the request message (e.g., the "initiating" SEPP 102A). In yet another embodiment, the security mechanism is selected based on the local policies of both the SEPP that sent the request message (e.g., SEPP 102A), and the SEPP that received the request message (e.g., SEPP 102B). In one such embodiment, the security mechanism is selected according to a preference order assigned to the security mechanisms by the initiating SEPP 102A.

The selection process can also be performed in any manner needed or desired. In one embodiment, however, the selection process involves negotiating the security mechanism between the SEPPs 102A, 102B and their local interconnect provider. This could either be done in a pre-configured manner or by additional messaging between the SEPPs and an interconnect node. In one embodiment, for example, the initiating SEPP 102A can perform the negotiation prior to sending the request message (line 204 in Figure 4) to the responding" SEPP 102B. In another embodiment, the responding SEPP 102B performs this function as part of its selection process in box 206 of Figure 4.

As illustrated above, the connection that is established between the SEPPs 102A, 102B in one embodiment is a TLS connection. However, the present embodiments are not so limited. Generally, although not required, a secure connection or tunnel is established between the SEPPs 102A, 102B. In one embodiment, for example, an integrity protected IPsec connection is established between the SEPPs 102A, 102B instead of the TLS connection.

According to the present embodiments, whether a security negotiation is occurring within the secure connection is explicitly indicated. For example, in one embodiment, when a security negotiation is occurring within the secure connection, it is indicated in a message header communicated outside of the protected part of the secure connection (e.g., in the TLS record layer header). This enables certain IPX servers, such as IPX entities 34, 36 seen in Figure 3, to allow the security negotiations to pass through IPX 32, which would otherwise drop according to the security policy. In another embodiment, the indication is based on an address field in the request message. For example, the address of the instructions that are executed to perform the security negotiation (e.g., a module comprising the instructions) would be different than the addresses of some other traffic. Therefore, in such embodiments, an explicit indication could be achieved by populating an address field in the request message with the address of a security negotiation module. For example, one embodiment of the present disclosure populates the destination address field in the request message with the address of the security negotiation module.

According to the present embodiments, the security capability negotiation does not always occur in a previously established secure connection. In some embodiments, for example, the security capability negotiation happens within one or more integrity protected messages of a protocol. These integrity protected messages can be, for example, TLS handshake messages, IKEv2 messages, MIKEY messages, protected JSON elements, or messages of another security establishment or key management protocol.

In addition to the above aspects, the negotiation can, according to one embodiment of the present disclosure, include non-security related features. An example of a situation where such an embodiment would be beneficial is one in which operators lease IMSI-space from each other. As part of the negotiation, the responding SEPP 102B informs the initiating SEPP 102A of a third SEPP that needs to be contacted for communication related to some IMSIs.

In some cases, the connection established between SEPPs 102A, 102B (line 202) may not be a secure connection, and the request message sent by the initiating SEPP 102A (line 204), including the supported security mechanisms of the initiating SEPP 102A, is not or cannot be integrity protected. Such is the case, for example, when the security negotiation happens in the very early stages of a security protocol run, and a security association for protecting the first message is not yet in place. In these cases, the responding SEPP 102B repeats the supported security mechanisms of the initiating SEPP 102A in the integrity protected response message (line 208). In this way the initiating SEPP 102A knows that the supported security mechanisms were not modified. In another embodiment, the responding SEPP 102B repeats the supported security mechanisms of initiating SEPP 102A in the integrity protected response message even though a secure integrity protected connection already exists.

According to the present disclosure, the SEPPs (e.g., SEPP 102A and/or SEPP 102B) can be configured to select a security mechanism in different ways. In one embodiment, for example the SEPPs 102A and/or 102B are configured to select a security mechanism for all the NFs in the PLMN in which they are disposed. In another embodiment, however, the SEPPs 102A and/or 102B are configured to select the security mechanism on an NF by NF basis. Regardless of the particular selection process, however, the SEPPs 102A, 102B are configured according to the present embodiments to maintain HTTP/2 connections in which individual messages (e.g., the request messages and response messages communicated between SEPP 102A and SEPP 102B) are interleaved as streams.

By way of example only, one embodiment of the present disclosure configures the SEPPs 102A, 102B to select a security mechanism for each HTTP/2 connection that is created. In these embodiments, the validity period of the security mechanism negotiation result is that of the HTTP/2 connection.

Another embodiment of the present disclosure configures the SEPPs 102A, 102B to periodically select the security mechanism. In these situations, the SEPPs 102A, 102B are configured to apply a negotiation result to all HTTP/2 connections. This implies terminating established HTTP/2 connections and opening new ones whenever the security mechanism negotiation result changes. In some embodiments, the validity period of the security mechanism negotiation result may be part of the negotiation.

In some cases, the security policies upon which the security mechanism selection is based can change. Therefore, in such embodiments, the present disclosure configures a SEPP 102A and/or 102B to unilaterally trigger selecting a security mechanism at any time within the validity period responsive to the change in security policies.

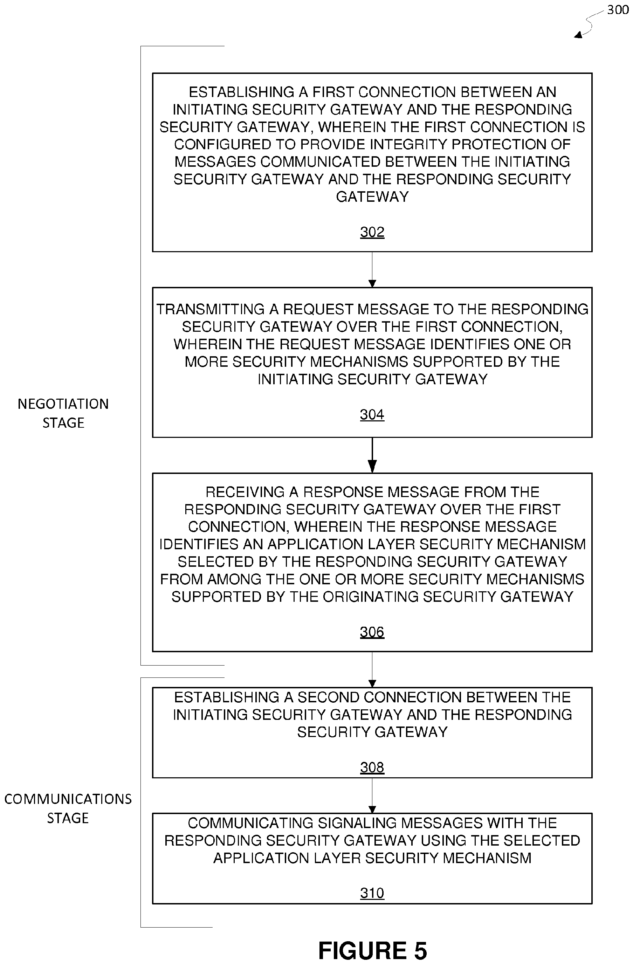

Figure 5 is a flow diagram illustrating a method 300, implemented at an "initiating" security gateway e.g., SEPP 102A), of negotiating a security mechanism with a "responding" security gateway (e.g., SEPP 102B) according to one embodiment of the present disclosure. In particular, this aspect of the present disclosure is implemented in multiple stages - i.e., a "negotiation" stage in which the SEPPs 102A, 102B negotiate and select an application layer security mechanism, and a "communications" stage in which the SEPPs 102A, 102B utilize the selected application layer security mechanism to communicate signalling messages.

As seen in Figure 5, the negotiation stage of method 300 begins with establishing a first connection between initiating" security gateway SEPP 102A and the "responding" security gateway SEPP 102B (box 302). In this embodiment, the first connection is configured to provide integrity protection of messages communicated between the initiating security gateway and the responding security gateway. The initiating SEPP 102A then transmits a request message to the responding SEPP 102B (box 304). As previously stated, the request message in this embodiment comprises information identifying the security mechanisms that are supported by the initiating SEPP 102A. In some embodiments, the security mechanisms are ordered. Method 300 then calls for the initiating SEPP 102A receiving a response message from the responding SEPP 102B (box 306). According to this embodiment, the response message comprises information identifying a security mechanism selected by the responding SEPP 102B. Additionally, the responding SEPP 102B is configured to select the security mechanism to use from the security mechanisms supported by the initiating SEPP 102A.

The initiating and responding SEPPs 102A, 102B are configured to utilize the selected security mechanism for ongoing communication in the communications stage. Particularly, a second connection (e.g., an N32-F connection) between the initiating SEPP 102A and the responding SEPP 102B is established (box 308). So connected, the initiating and responding SEPPs 102A, 102B utilize the application security mechanism that was selected in the negotiation stage to communicate signalling messages. Any of the aspects disclosed above may be included in the example method of Figure 5.

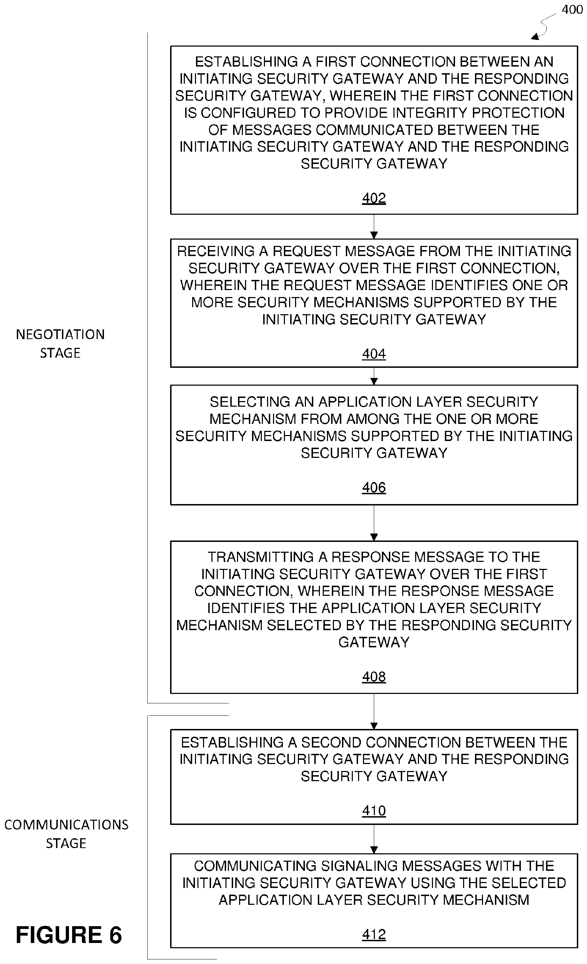

Figure 6 is a flow diagram illustrating a method 400, implemented at the responding SEPP 102B, of negotiating a security mechanism with the initiating SEPP 102A according to one embodiment of the present disclosure. Similar to the method 300 described in connection with Figure 5, the SEPPs 102A, 102B are security gateways in different PLMNs (e.g., PLMNs 12, 14). Additionally, the responding SEPP 102B implements method 400 in two stages - i.e., the "negotiation" stage in which SEPPs 102A, 102B negotiate and select the application layer security mechanism, and the "communications" stage in which SEPPs 102A, 102B utilize the selected application layer security mechanism to communicate signalling messages.

As seen in Figure 6, the negotiation stage of method 400 begins with establishing the first connection between the initiating SEPP 102A and the responding 102B (box 402). As above, the first connection is configured to provide integrity protection of messages communicated between the initiating SEPP 102A and the responding SEPP 102B. The responding SEPP 102B then receives a request message from the initiating SEPP 102A (box 404). As above, the request message comprises information identifying the security mechanisms that are supported by the initiating SEPP 102A. Responsive to receiving the request message, method 400 calls for the responding SEPP 102B selecting a security mechanism from among those identified in the request message to be utilized for ongoing communications between the initiating and responding SEPPs 102A, 102B (box 406). So selected, method 400 calls for the responding SEPP 102B transmitting a response message to the initiating SEPP 102A (box 408). In this embodiment, the response message comprises information identifying the selected security mechanism to the initiating SEPP 102A.

As above, the initiating and responding SEPPs 102A, 102B are configured to utilize the selected application security mechanism for ongoing communication in the communications stage. Particularly, a second connection (e.g., the N32-F connection) between the initiating SEPP 102A and the responding SEPP 102B is established (box 410). So connected, the initiating and responding SEPPs 102A, 102B utilize the application security mechanism that was selected in the negotiation stage to communicate signalling messages (box 412). Any of the aspects disclosed above may be included in the example method of Figure 6.

Note that the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

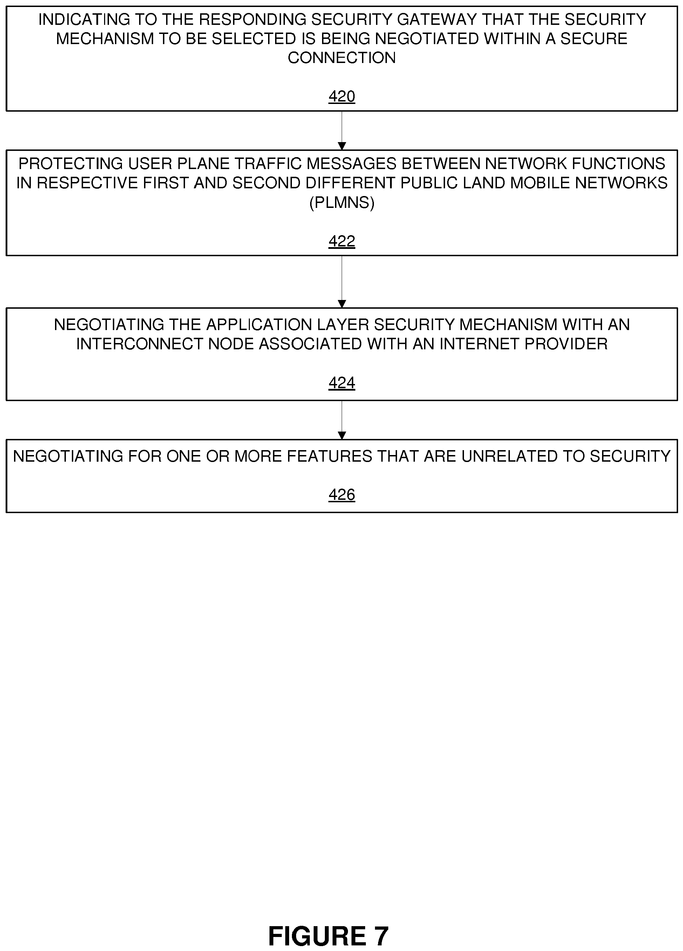

Figure 7 illustrates some additional functions that may be performed by one or both of the initiating SEPP 102A and the responding SEPP 102B according to the present embodiments. Particularly, as seen in Figure 7, the initiating SEPP 102A may indicate in the request message to the responding SEPP 102B that the security mechanism to be selected is being negotiated within a secure connection (box 420). As previously described, such indications can be made in different ways. In one embodiment, for example, the initiating SEPP 102A indicates that the security mechanism to be selected is being negotiated in a message header communicated outside of the protected part of the secure connection. In another embodiment, the initiating SEPP 102A populates an address field of the request message with an address of the security negotiation module.

Additionally, according to the present embodiments, the initiating and responding SEPPs 102A, 102B are configured to protect user plane messages being communicated between network functions disposed in respective first and second PLMNs (box 422).

In some embodiments, the initiating and/or the responding SEPP 102A, 102B is configured to negotiate the security mechanism with an interconnect node associated with an internet provider (box 424). For example, in one embodiment, the initiating SEPP 102A performs this negotiation prior to sending the request message to the responding SPP 102B. In another embodiment, the responding SEPP 102B performs this negotiation as part of the process of selecting an appropriate security mechanism. Regardless of the particular device performing this function, however, this allows the security negotiations to pass through IPX 32, which could otherwise drop depending on the security policy.

Further, in one embodiment, the negotiation can include features that are not related to security functions (box 426). For example, in a situation where operators lease IMSI-space from each other, the responding SEPP 102B could, as part of the negotiation process, inform the initiating SEPP 102A of a third SEPP that needs to be contacted for communication related to some IMSIs.

As stated previously, the security policies upon which the security mechanism selection is based can change in some cases. Therefore, embodiments of the present disclosure, upon detecting that the currently selected application layer security mechanism should change (e.g., responsive to a change in security policies) (box 430), configure SEPP 102A and/or 102B to unilaterally trigger selecting a new application layer security mechanism at any time within a validity period (box 432).

Responsive to selecting a new application layer security mechanism, the present embodiments terminate all connections to which the currently selected application layer security mechanism has been applied (box 440), and opens new connections (box 444). Then, the newly selected application layer security mechanism is applied to each of the newly opened connections (box 446).

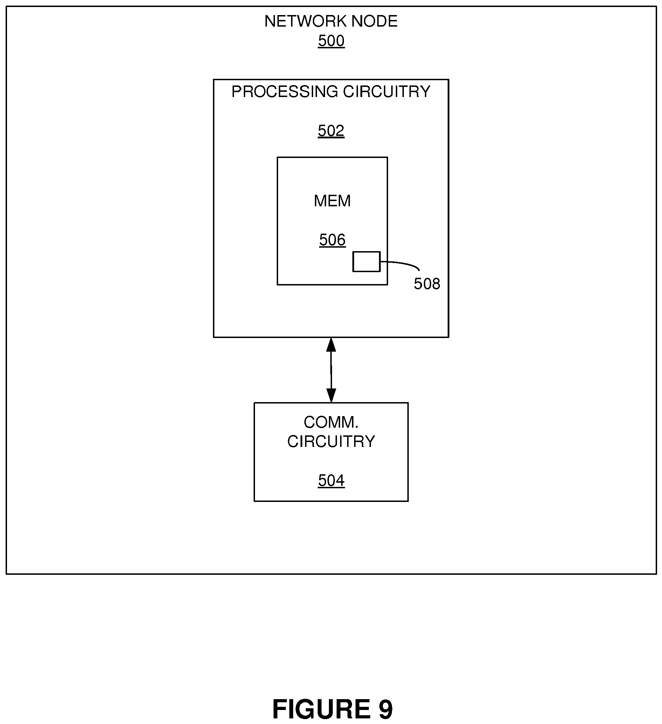

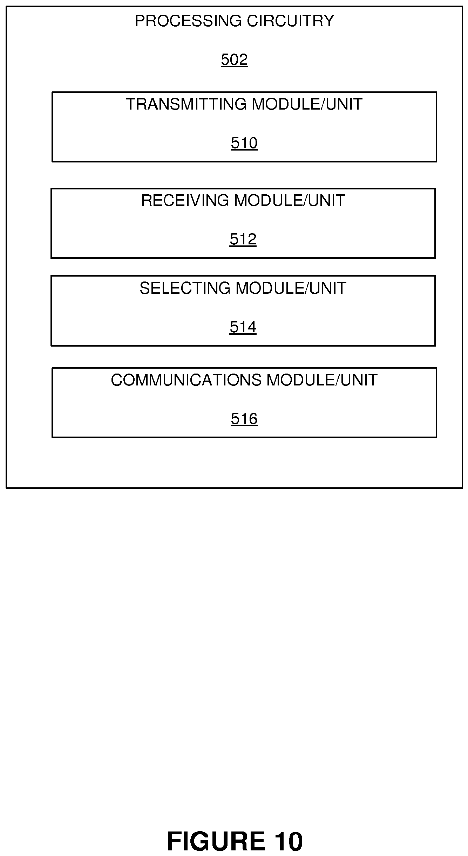

Figure 9 illustrates a network node 500, such as a security gateway (e.g., SEPP 102A, SEPP 102B), implemented in accordance with one or more embodiments of the present disclosure. As seen in Figure 9, the network node 500 comprises processing circuitry 502 and communication circuitry 504. The communication circuitry 504 is configured to transmit and/or receive information to and/or from one or more other network nodes, e.g., other SEPPs, via any communication technology. Such messages include, but are not limited to, the previously described request and response messages communicated between SEPP 102A and SEPP 102B. The processing circuitry 502 is configured to perform processing described above, such as by executing instructions (e.g., a control program) 508 stored in memory 506, and in one embodiment, is configured to implement certain functional means, units, or modules, such as those illustrated in Figure 10 below.

Figure 10 is a functional block diagram of processing circuitry 502 in network node 500 operating in a wireless network according to one or more embodiments of the present disclosure. As seen in Figure 10, the network node 500 implements various functional means, units, or modules, e.g., via the processing circuitry 502 and/or via software code. These functional means, units, or modules, e.g., for implementing the method(s) herein, include for example, a transmitting module/unit 510, a receiving module/unit 512, a selecting module/unit 514, and a communications module/unit 516. Each of these module/units 510, 512, 514, 516 are configured according to embodiments disclosed herein to implement the previously described aspects of the present disclosure.

In particular, the transmitting module/unit 510 is configured to transmit messages to another network node 500, such as SEPP 102A, 102B. As previously described, the messages may be a request message sent by the initiating SEPP 102A, or a response message sent by the responding SEPP 102B that received the request message. Request messages comprise data and information indicating, for example, the particular security mechanisms that are supported by the network node 500 sending the request message. The response messages comprise data and information indicating to the initiating network node 500 which of those security mechanisms have been selected by the network node 500 sending the response message. The receiving module/unit 512 is configured to receive the request messages comprising the supported security mechanisms sent by the initiating network node 500, as well as the response messages identifying the selected security mechanisms.

The selecting module/unit 514 is configured to select one or more of the security mechanisms from those identified in the request message, as previously described. Once selected, the network node 500 generates the response message comprising the information indicating the selected security mechanism to the initiating network node 500.

The communications module/node 516 is configured to communicate signalling and/or user plane traffic data utilizing the selected security mechanisms negotiated by the network node 500.

Those of ordinary skill in the art will also appreciate that embodiments herein further include corresponding computer programs, such as control program 508 illustrated in Figure 7. According to the present disclosure, control program 508 comprises instructions which, when executed on at least one processor of an apparatus (e.g., processing circuitry 502 on network node 500 seen in Figures 9-10), cause the apparatus to carry out any of the respective processing described above. A control program 508 in this regard may comprise one or more code modules corresponding to the means or units described above.

Embodiments further include a carrier containing such a computer program 508. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus (e.g., network node 500) to perform the functions of the present embodiments as described above.

Embodiments further include a computer program product comprising program code portions for performing the steps of any of the embodiments herein when the computer program product is executed by a computing device. This computer program product may be stored on a computer readable recording medium, such as memory 506.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Some of the embodiments contemplated herein are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

## Claims

1. A method (300) for negotiating a security mechanism with a responding security gateway (102B), the method comprising:
in a negotiation stage:
establishing (302) a first connection between an initiating security gateway (102A) and the responding security gateway, wherein the first connection is configured to provide integrity protection of messages communicated between the initiating security gateway and the responding security gateway;
transmitting (304) a request message to the responding security gateway over the first connection, wherein the request message identifies one or more security mechanisms supported by the initiating security gateway;
receiving (306) a response message from the responding security gateway over the first connection, wherein the response message identifies an application layer security mechanism selected by the responding security gateway from among the one or more security mechanisms supported by the initiating security gateway;
in a communications stage:
communicating (310) signaling messages with the responding security gateway using the selected application layer security mechanism.

2. The method according to claim 1, wherein the first connection is an integrity protected Transport Layer Security (TLS) connection.

3. The method according to claim 1, wherein the first connection is an integrity protected Internet Protocol Security (IPsec) connection.

4. The method according to any of the preceding claims further comprising, in the communications stage:
establishing (308) a second connection between the initiating security gateway and the responding security gateway; and
communicating the signaling messages over the second connection with the responding security gateway using the selected application layer security mechanism.

5. The method according to claim 4 wherein the second connection is an N32-F connection.

6. The method according to any of the preceding claims wherein the application layer security is an N32 Application Layer Security.

7. The method according to claim 4 wherein communicating signaling messages with the responding security gateway using the selected application layer security mechanism comprises protecting the signaling messages communicated between network functions associated with respective different Public Land Mobile Networks (PLMNs) (12, 14).

8. The method according to any of the preceding claims further comprising protecting user plane traffic messages communicated between network functions in respective first and second different Public Land Mobile Networks (PLMNs).

9. The method of any of the preceding claims wherein the one or more security mechanisms are ordered according to a preference of one or both of the initiating security gateway and the responding security gateway.

10. The method of any of the preceding claims wherein the one or more security mechanisms comprise one or more security protocols.

11. The method of any of the preceding claims wherein the negotiation stage is performed by a Secure Edge Protection Proxy (SEPP).

12. The method of any of the preceding claims wherein the negotiation stage is performed by one of:
a network resource function (NRF);
a network exposure function (NEF);
a network server device.

13. The method of any of the preceding claims further comprising indicating to the responding security gateway that the security mechanism to be selected is being negotiated within a secure connection.

14. The method of claim 13 wherein indicating to the responding security gateway that the security mechanism to be selected is being negotiated within a secure connection comprises indicating that the security mechanism to be selected is being negotiated in a message header communicated outside of the protected part of the secure connection.

15. The method of claim 13 wherein indicating to the responding security gateway that the security mechanism to be selected is being negotiated within a secure connection comprises populating an address field of the request message with an address of the security negotiation module.

16. The method of any of the preceding claims further comprising:
detecting that the selected application layer security mechanism should be changed; and
triggering selection of a new application layer security mechanism within a predetermined time period.

17. The method of any of the preceding claims further comprising negotiating the application layer security mechanism with an interconnect node associated with an Internet Provider prior to transmitting the request message to the responding security gateway.

18. A network node (500) for negotiating a security mechanism with a responding security gateway (102B), according to the method of any of claims 1 to 17.

19. A method (400) for negotiating a security mechanism with an initiating security gateway (102A), the method comprising:
in a negotiation stage:
establishing (402) a first connection between the initiating security gateway and a responding security gateway (102B), wherein the first connection is configured to provide integrity protection of messages communicated between the initiating security gateway and the responding security gateway;
receiving (404) a request message from the initiating security gateway over the first connection, wherein the request message identifies one or more security mechanisms supported by the initiating security gateway;
selecting (406) an application layer security mechanism from among the one or more security mechanisms supported by the initiating security gateway; and
transmitting (408) a response message to the initiating security gateway over the first connection, wherein the response message identifies the application layer security mechanism selected by the responding security gateway; and
in a communications stage:
communicating (412) signaling messages with the initiating security gateway using the selected application layer security mechanism.

20. The method according to claim 19 wherein one or both of the request and response messages comprise integrity protected messages of a protocol.

21. The method according to any of the preceding claims further comprising:
establishing (410) a second connection between the initiating security gateway and the responding security gateway, wherein the second connection is different than the first connection; and
communicating the signaling messages with the initiating security gateway using the selected application layer security mechanism over the second connection.

22. A network node (500) for negotiating a security mechanism with an initiating security gateway (102A), according to the method of any of claims 19 to 21.

## Patentansprüche

1. Verfahren (300) zum Verhandeln eines Sicherheitsmechanismus mit einem antwortenden Sicherheits-Gateway (102B), wobei das Verfahren umfasst:
in einer Verhandlungsphase:
Aufbauen (302) einer ersten Verbindung zwischen einem initiierenden Sicherheits-Gateway (102A) und dem antwortenden Sicherheits-Gateway, wobei die erste Verbindung so konfiguriert ist, dass sie einen Integritätsschutz von Nachrichten bereitstellt, die zwischen dem initiierenden Sicherheits-Gateway und dem antwortenden Sicherheits-Gateway kommuniziert werden;
Übertragen (304) einer Anforderungsnachricht an das antwortende Sicherheits-Gateway über die erste Verbindung, wobei die Anforderungsnachricht einen oder mehrere Sicherheitsmechanismen identifiziert, die von dem initiierenden Sicherheits-Gateway unterstützt werden;
Empfangen (306) einer Antwortnachricht von dem antwortenden Sicherheits-Gateway über die erste Verbindung, wobei die Antwortnachricht einen Sicherheitsmechanismus der Anwendungsschicht identifiziert, der von dem antwortenden Sicherheits-Gateway aus dem einen oder den mehreren Sicherheitsmechanismen,
die von dem initiierenden Sicherheits-Gateway unterstützt werden, ausgewählt wird;
in einer Kommunikationsphase:
Kommunizieren (310) von Signalisierungsnachrichten mit dem antwortenden Sicherheits-Gateway unter Verwendung des ausgewählten Sicherheitsmechanismus der Anwendungsschicht.

2. Verfahren nach Anspruch 1, wobei die erste Verbindung eine integritätsgeschützte Transportschichtsicherheits-(Transport *Layer Security* - TLS-) Verbindung ist.

3. Verfahren nach Anspruch 1, wobei die erste Verbindung eine integritätsgeschützte Internetprotokollsicherheits (IPsec-) Verbindung ist.

4. Verfahren nach einem der vorhergehenden Ansprüche, das ferner in der Kommunikationsphase umfasst:
Aufbauen (308) einer zweiten Verbindung zwischen dem initiierenden Sicherheits-Gateway und dem antwortenden Sicherheits-Gateway; und
Kommunizieren der Signalisierungsnachrichten über die zweite Verbindung mit dem antwortenden Sicherheits-Gateway unter Verwendung des ausgewählten Sicherheitsmechanismus der Anwendungsschicht.

5. Verfahren nach Anspruch 4, wobei die zweite Verbindung eine N32-F-Verbindung ist.

6. Verfahren nach einem der vorhergehenden Ansprüche, wobei die Sicherheit der Anwendungsschicht eine N32-Anwendungs-schichtsicherheit ist.

7. Verfahren nach Anspruch 4, wobei das Kommunizieren von Signalisierungsnachrichten mit dem antwortenden Sicherheits-Gateway unter Verwendung des ausgewählten Sicherheitsmechanismus der Anwendungsschicht das Schützen der Signalisierungsnachrichten umfasst, die zwischen Netzwerkfunktionen kommuniziert werden, die mit jeweiligen unterschiedlichen Mobilkommunikationsnetzen *(Public Land Mobile Networks* - PLMNs) (12, 14) assoziiert sind.

8. Verfahren nach einem der vorhergehenden Ansprüche, das ferner das Schützen von Verkehrsnachrichten der Nutzerebene umfasst, die zwischen Netzwerkfunktionen in jeweiligen ersten und zweiten unterschiedlichen Mobilkommunikationsnetzen (PLMNs) kommuniziert werden.

9. Verfahren nach einem der vorhergehenden Ansprüche, wobei der eine oder die mehreren Sicherheitsmechanismen gemäß einer Präferenz eines oder beider des initiierenden Sicherheits-Gateways oder des antwortenden Sicherheits-Gateways geordnet werden.

10. Verfahren nach einem der vorangehenden Ansprüche, wobei der eine oder die mehreren Sicherheitsmechanismen ein oder mehrere Sicherheitsprotokolle umfassen.

11. Verfahren nach einem der vorhergehenden Ansprüche, wobei die Verhandlungsstufe von einem Schutzproxy für sicheres Edge *(Secure Edge Protection Proxy* - SEPP) durchgeführt wird.

12. Verfahren nach einem der vorhergehenden Ansprüche, wobei die Verhandlungsstufe durchgeführt wird durch eine von:
einer Netzressourcenfunktion (NRF);
einer Netzexpositionsfunktion (NEF);
einer Netzservervorrichtung.

13. Verfahren nach einem der vorangehenden Ansprüche, das ferner das Anzeigen an das antwortende Sicherheits-Gateway umfasst, dass der auszuwählende Sicherheitsmechanismus innerhalb einer sicheren Verbindung verhandelt wird.

14. Verfahren nach Anspruch 13, wobei das Anzeigen an das antwortende Sicherheits-Gateway, dass der auszuwählende Sicherheitsmechanismus innerhalb einer sicheren Verbindung verhandelt wird, das Anzeigen umfasst, dass der auszuwählende Sicherheitsmechanismus in einem Nachrichtenkopf verhandelt wird, der außerhalb des geschützten Teils der sicheren Verbindung kommuniziert wird.

15. Verfahren nach Anspruch 13, wobei das Anzeigen an das antwortende Sicherheits-Gateway, dass der auszuwählende Sicherheitsmechanismus innerhalb einer sicheren Verbindung verhandelt wird, das Bestücken eines Adressfeldes der Anforderungsnachricht mit einer Adresse des Sicherheitsverhandlungsmoduls umfasst.

16. Verfahren nach einem der vorhergehenden Ansprüche, ferner umfassend:
Erkennen, dass der ausgewählte Sicherheitsmechanismus der Anwendungsschicht geändert werden sollte; und
Auslösen einer Auswahl eines neuen Sicherheitsmechanismus der Anwendungsschicht innerhalb einer vorbestimmten Zeitspanne.

17. Verfahren nach einem der vorhergehenden Ansprüche, das ferner das Aushandeln des Sicherheitsmechanismus der Anwendungsschicht mit einem Zwischenverbindungsknoten umfasst, der mit einem Internet-Dienstleister assoziiert ist, bevor die Anforderungsnachricht an das antwortende Sicherheits-Gateway übertragen wird.

18. Netzwerkknoten (500) zum Verhandeln eines Sicherheitsmechanismus mit einem antwortenden Sicherheits-Gateway (102B) gemäß dem Verfahren nach einem der Ansprüche 1 bis 17.

19. Verfahren (400) zum Verhandeln eines Sicherheitsmechanismus mit einem initiierenden Sicherheits-Gateway (102A), wobei das Verfahren umfasst:
in einer Verhandlungsphase:
Aufbauen (402) einer ersten Verbindung zwischen einem initiierenden Sicherheits-Gateway und einem antwortenden Sicherheits-Gateway (102B), wobei die erste Verbindung so konfiguriert ist, dass sie einen Integritätsschutz von Nachrichten bereitstellt, die zwischen dem initiierenden Sicherheits-Gateway und dem antwortenden Sicherheits-Gateway kommuniziert werden;
Empfangen (404) einer Anforderungsnachricht von dem initiierenden Sicherheits-Gateway über die erste Verbindung, wobei die Anforderungsnachricht einen oder mehrere Sicherheitsmechanismen identifiziert, die von dem initiierenden Sicherheits-Gateway unterstützt werden;
Auswählen (406) eines Sicherheitsmechanismus der Anwendungsschicht aus dem einen oder den mehreren Sicherheitsmechanismen,
die von dem initiierenden Sicherheits-Gateway unterstützt werden; und
Übertragen (408) einer Antwortnachricht an das initiierende Sicherheits-Gateway über die erste Verbindung, wobei die Antwortnachricht den Sicherheitsmechanismus der Anwendungsschicht identifiziert, der von dem antwortenden Sicherheits-Gateway ausgewählt wird; und
in einer Kommunikationsphase:
Kommunizieren (412) von Signalisierungsnachrichten mit dem initiierenden Sicherheits-Gateway unter Verwendung des ausgewählten Sicherheitsmechanismus der Anwendungsschicht.

20. Verfahren nach Anspruch 19, wobei eine oder beide der Anforderungs- und Antwortnachrichten integritätsgeschützte Nachrichten eines Protokolls umfassen.

21. Verfahren nach einem der vorhergehenden Ansprüche, ferner umfassend:
Aufbauen (410) einer zweiten Verbindung zwischen dem initiierenden Sicherheits-Gateway und dem antwortenden Sicherheits-Gateway, wobei sich die zweite Verbindung von der ersten Verbindung unterscheidet; und
Kommunizieren der Signalisierungsnachrichten über die zweite Verbindung mit dem initiierenden Sicherheits-Gateway unter Verwendung des ausgewählten Sicherheitsmechanismus der Anwendungsschicht.

22. Netzknoten (500) zum Verhandeln eines Sicherheitsmechanismus mit einem initiierenden Sicherheits-Gateway (102A) gemäß dem Verfahren nach einem der Ansprüche 19 bis 21.

## Revendications

1. Procédé (300) pour négocier un mécanisme de sécurité avec une passerelle de sécurité répondante (102B), le procédé comprenant :
dans une étape de négociation :
l'établissement (302) d'une première connexion entre une passerelle de sécurité initiatrice (102A) et la passerelle de sécurité répondante, dans lequel la première connexion est configurée pour fournir une protection d'intégrité des messages communiqués entre la passerelle de sécurité initiatrice et la passerelle de sécurité répondante ;
la transmission (304) d'un message de demande à la passerelle de sécurité répondante sur la première connexion, le message de demande identifiant un ou plusieurs mécanismes de sécurité pris en charge par la passerelle de sécurité initiatrice ;
la réception (306) d'un message de réponse à partir de la passerelle de sécurité répondante sur la première connexion, dans lequel le message de réponse identifie un mécanisme de sécurité de couche d'application sélectionné par la passerelle de sécurité répondante parmi l'un ou plusieurs mécanismes de sécurité pris en charge par la passerelle de sécurité initiatrice ;
dans une étape de communication :
la communication (310) de messages de signalisation avec la passerelle de sécurité répondante en utilisant le mécanisme de sécurité de couche d'application sélectionné.

2. Procédé selon la revendication 1, dans lequel la première connexion est une connexion de sécurité de couche de transport (TLS) à intégrité protégée.

3. Procédé selon la revendication 1, dans lequel la première connexion est une connexion de sécurité de protocole Internet (IPsec) à intégrité protégée.

4. Procédé selon l'une quelconque des revendications précédentes, comprenant en outre, dans l'étape de communication :
l'établissement (308) d'une seconde connexion entre la passerelle de sécurité initiatrice et la passerelle de sécurité répondante ; et
la communication des messages de signalisation sur la seconde connexion avec la passerelle de sécurité répondante en utilisant le mécanisme de sécurité de couche d'application sélectionné.

5. Procédé selon la revendication 4, dans lequel la seconde connexion est une connexion N32-F.

6. Procédé selon l'une quelconque des revendications précédentes, dans lequel la sécurité de couche d'application est une sécurité de couche d'application N32.

7. Procédé selon la revendication 4, dans lequel la communication de messages de signalisation avec la passerelle de sécurité répondante en utilisant le mécanisme de sécurité de couche d'application sélectionné comprend la protection des messages de signalisation communiqués entre des fonctions de réseau associées à différents réseaux mobiles publics terrestres (PLMN) respectifs (12, 14).

8. Procédé selon l'une quelconque des revendications précédentes, comprenant en outre la protection des messages de trafic du plan utilisateur communiqués entre les fonctions de réseau dans des premier et second réseaux mobiles publics terrestres (PLMN) respectifs.

9. Procédé selon l'une quelconque des revendications précédentes, dans lequel l'un ou plusieurs mécanismes de sécurité sont ordonnés selon une préférence de l'une ou des deux parmi la passerelle de sécurité initiatrice et la passerelle de sécurité répondante.

10. Procédé selon l'une quelconque des revendications précédentes, dans lequel l'un ou plusieurs mécanismes de sécurité comprennent un ou plusieurs protocoles de sécurité.

11. Procédé selon l'une quelconque des revendications précédentes, dans lequel l'étape de négociation est effectuée par un proxy de protection Secure Edge (SEPP).

12. Procédé selon l'une quelconque des revendications précédentes, dans lequel l'étape de négociation est effectuée par l'un parmi :
une fonction de ressource de réseau (NRF) ;
une fonction d'exposition de réseau (NEF) ;
un dispositif serveur de réseau.

13. Procédé selon l'une quelconque des revendications précédentes, comprenant en outre l'indication à la passerelle de sécurité répondante que le mécanisme de sécurité à sélectionner est en cours de négociation dans une connexion sécurisée.

14. Procédé selon la revendication 13, dans lequel l'indication à la passerelle de sécurité répondante que le mécanisme de sécurité à sélectionner est en cours de négociation dans une connexion sécurisée comprend l'indication que le mécanisme de sécurité à sélectionner est en cours de négociation dans un en-tête de message communiqué à l'extérieur de la partie protégée de la connexion sécurisée.

15. Procédé selon la revendication 13, dans lequel l'indication à la passerelle de sécurité répondante que le mécanisme de sécurité à sélectionner est en cours de négociation dans une connexion sécurisée comprend le remplissage d'un champ d'adresse du message de demande avec une adresse du module de négociation de sécurité.

16. Procédé selon l'une quelconque des revendications précédentes, comprenant en outre :
la détection du fait que le mécanisme de sécurité de couche d'application sélectionné doit être changé ; et
le déclenchement de la sélection d'un nouveau mécanisme de sécurité de couche d'application dans une période de temps prédéterminée.

17. Procédé selon l'une quelconque des revendications précédentes, comprenant en outre la négociation du mécanisme de sécurité de la couche d'application avec un nœud d'interconnexion associé à un fournisseur Internet avant la transmission du message de demande à la passerelle de sécurité répondante.

18. Nœud de réseau (500) pour négocier un mécanisme de sécurité avec une passerelle de sécurité répondante (102B), selon le procédé de l'une quelconque des revendications 1 à 17.

19. Procédé (400) pour négocier un mécanisme de sécurité avec une passerelle de sécurité initiatrice (102A), le procédé comprenant :
dans une étape de négociation :
l'établissement (402) d'une première connexion entre la passerelle de sécurité initiatrice et une passerelle de sécurité répondante (102B), dans lequel la première connexion est configurée pour fournir une protection d'intégrité des messages communiqués entre la passerelle de sécurité initiatrice et la passerelle de sécurité répondante ;
la réception (404) d'un message de demande à partir de la passerelle de sécurité initiatrice sur la première connexion, dans lequel le message de demande identifie un ou plusieurs mécanismes de sécurité pris en charge par la passerelle de sécurité initiatrice ;
la sélection (406) d'un mécanisme de sécurité de couche d'application parmi l'un ou plusieurs mécanismes de sécurité pris en charge par la passerelle de sécurité initiatrice ; et
la transmission (408) d'un message de réponse à la passerelle de sécurité initiatrice sur la première connexion, le message de réponse identifiant le mécanisme de sécurité de couche d'application sélectionné par la passerelle de sécurité répondante ; et
dans une étape de communication :
la communication (412) de messages de signalisation avec la passerelle de sécurité initiatrice en utilisant le mécanisme de sécurité de couche d'application sélectionné.

20. Procédé selon la revendication 19, dans lequel l'un ou les deux messages de demande et de réponse comprennent des messages à intégrité protégée par d'un protocole.

21. Procédé selon l'une quelconque des revendications précédentes, comprenant en outre :
l'établissement (410) d'une seconde connexion entre la passerelle de sécurité initiatrice et la passerelle de sécurité répondante, dans lequel la seconde connexion est différente de la première connexion ; et
la communication des messages de signalisation avec la passerelle de sécurité initiatrice en utilisant le mécanisme de sécurité de couche d'application sélectionné sur la seconde connexion.

22. Nœud de réseau (500) pour négocier un mécanisme de sécurité avec une passerelle de sécurité initiatrice (102A), selon le procédé de l'une quelconque des revendications 19 à 21.
